# EUROPEAN PATENT APPLICATION

(11) **EP 4 803 869 A1**
(43) Date of publication of application: **09.09.2026**
(21) Application number: 24888079.1
(22) Date of filing: 08.11.2024
(51) Int. Cl.: G01J 9/00

(54) **AREA-BASED MEASUREMENT DEVICE AND METHOD FOR CENTRAL WAVELENGTH**

(30) Priority: 10.11.2023 CN 202311498716
(71) Applicant: Hamamatsu Photonics (China) Co., Ltd., Beijing 100020 (CN); Hamamatsu Photonics K.K., Hamamatsu-shi, Shizuoka 435-8558 (JP)
(72) Inventor: XIANG, Chenghao, Beijing 100020 (CN)
(74) Representative: Hoffmann Eitle
(86) International application number: PCT/CN2024/130788
(87) International publication number: WO 2025/098468

(57) **Abstract**

The present disclosure relates to an area-based measurement device and method for central wavelength. The apparatus comprises: a measured light-emitting body that emits measured light; a filter switching unit that switches between a first filter and a second filter, thereby allowing the measured light to pass through the first filter and the second filter respectively; and a photosensitive device that detects a first light transmitted through the first filter to obtain a first measurement value, and detects a second light transmitted through the second filter to obtain a second measurement value. The first filter and the photosensitive device constitute a first optical system, and the second filter and the photosensitive device constitute a second optical system. Within a wavelength range of the measured light, a ratio of spectral characteristic curves of the first optical system and the second optical system has no repeated values, and the central wavelength of the measured light is obtained from a ratio of the first measurement value and the second measurement value. Thus, the central wavelength of the measured light can be measured by a simple method.

## Description

### TECHNICAL FIELD

The present disclosure relates to the field of wavelength measurement, and in particular, to an area-based measurement device and method for central wavelength.

### BACKGROUND

Wavelength is one of the important characteristic indicators of display devices and light-emitting devices, directly affecting the optical quality of products. There are known methods for wavelength measurement using a spectroscopic component, such as a spectroscope or a grating, based on interference principles. However, such methods have a small field of view, resulting in slow actual wavelength measurement speed, and belong to single-point measurement methods.

In industries such as semiconductors, LEDs, flat panel displays, and photovoltaics, there is often a desire in actual production to measure wavelength quickly and over a large area. Therefore, it is desired that the wavelength measurement method has a large field of view and can measure an area at one time. Such a method is called an area-based measurement method.

Patent Document 1 discloses a method for estimating the wavelength of a light-emitting body, wherein the measured light at a specific position is divided into a long wavelength segment and a short wavelength segment, the brightness of the long wavelength segment and the short wavelength segment are measured respectively, and the central wavelength of the measured light is estimated from the ratio of the two brightness values.

Patent Document 2 proposes using a dichroic mirror to split the measured light into a long wavelength segment and a short wavelength segment, and deriving color spot information of a light-emitting element based on fluorescence images of the long wavelength segment and the short wavelength segment.

### Prior Art Documents

Patent Document 1: Japanese Patent Laid-Open No. 2015-10834
Patent Document 2: Chinese Patent Application No. 202080024982.

### SUMMARY OF THE INVENTION

### Technical Problem to be Solved

However, in the above prior arts, in order to measure information such as the wavelength of the measured light, a high-pass or low-pass filter with a steep characteristic curve is used, or a linear dichroic mirror is used to split the measured light into two beams, and then the wavelength is estimated using the results of two measurements. Because the spectral characteristic curve of current detectors (photosensitive devices) is not linear (typically convex in the middle and concave at both ends), it cannot be guaranteed that the relationship between the wavelength of the measured light and the ratio of the measurement results of the two measurement systems is unique, leading to poor wavelength measurement accuracy and applicability of the above prior arts. Moreover, even if the spectral characteristic curve of the detector itself is linear, after coupling with a filter or a dichroic mirror, it may still not be possible to guarantee a unique relationship between the wavelength of the measured light and the ratio of the measurement results of the two measurement systems. Therefore, it is necessary to design the filter and the detector as a whole to ensure that the relationship between the wavelength of the measured light and the ratio of the measurement results of the two measurement systems is unique.

The present disclosure is made based on the above technical problem, and an object thereof is to provide an area-based measurement device and method for central wavelength that measure the central wavelength of measured light using two optical systems in which the ratio of the overall spectral characteristic curves has no repeated values.

### Means for Solving the Technical Problem

An area-based measurement device for central wavelength according to one aspect of the present disclosure comprises: a measured light-emitting body that emits measured light; a filter switching unit that switches between a first filter and a second filter, thereby allowing the measured light to pass through the first filter and the second filter respectively; and a photosensitive device that detects a first light transmitted through the first filter to obtain a first measurement value, and detects a second light transmitted through the second filter to obtain a second measurement value. The first filter and the photosensitive device constitute a first optical system, and the second filter and the photosensitive device constitute a second optical system. Within a wavelength range of the measured light, a ratio of spectral characteristic curves of the first optical system and the second optical system has no repeated values, and the central wavelength of the measured light is obtained from a ratio of the first measurement value and the second measurement value.

According to the area-based measurement device for central wavelength of one aspect of the present disclosure, it is not necessary to use a wavelength area measuring element such as an imaging colorimeter. By appropriately selecting the spectral characteristic curves of the first and second filters and the photosensitive device, the central wavelength of the measured light can be obtained quickly and accurately using a simple method. Moreover, the area-based measurement device for central wavelength can be applied to various photosensitive devices and various wavelength ranges.

In the area-based measurement device for central wavelength of the present disclosure, within the wavelength range of the measured light, the spectral characteristic curves of the first optical system and the second optical system may have exactly one intersection point.

In the area-based measurement device for central wavelength of the present disclosure, within the wavelength range of the measured light, one of the spectral characteristic curves of the first optical system and the second optical system may monotonically increase, and the other of the spectral characteristic curves of the first optical system and the second optical system may monotonically decrease.

In the area-based measurement device for central wavelength of the present disclosure, let the central wavelength be *λ_{c}*, the first measurement value be *out*₁, and the second measurement value be *out*₂; then, ${λ}_{c} = \frac{{b}_{1} - {b}_{2} \times \frac{{out}_{1}}{{out}_{2}}}{{k}_{2} \times \frac{{out}_{1}}{{out}_{2}} - {k}_{1}}$ wherein *k*₁, *k*₂, *b*₁ and *b*₂ are constants that depend on the first filter, the second filter, and the photosensitive device.

In the area-based measurement device for central wavelength of the present disclosure, the photosensitive device may be at least one of a silicon photomultiplier (MPPC/SiPM), a single-photon avalanche diode (SPAD), a CCD image sensor, a CMOS image sensor, a TDI-CCD image sensor, an sCMOS image sensor, a qCMOS image sensor, a photomultiplier tube (PMT), a photodiode, a PIN photodiode, and an avalanche photodiode.

In the area-based measurement device for central wavelength of the present disclosure, the spectral characteristic curves of the first optical system and the second optical system may include at least one of a linear function, an exponential function, a monotonic polynomial function, and a power function.

In the area-based measurement device for central wavelength of the present disclosure, the first filter and the second filter may be broadband filters, and the transmittance of the first filter and the second filter may be 30% or more.

In the area-based measurement device for central wavelength of the present disclosure, the first measurement value and the second measurement value may be light intensity values, or count values, voltage values, current values corresponding to light intensity values.

In the area-based measurement device for central wavelength of the present disclosure, the wavelength ranges of the first filter and the second filter may be wider than the wavelength range of the photosensitive device.

In the area-based measurement device for central wavelength of the present disclosure, an optical element for adjusting an optical path or polarization state of the measured light may be disposed between the measured light-emitting body and the filter switching unit. The optical element, the first filter, and the photosensitive device may constitute the first optical system, and the optical element, the second filter, and the photosensitive device may constitute the second optical system.

An area-based measurement device for central wavelength according to another aspect of the present disclosure comprises: a measured light-emitting body that emits measured light; a dichroic mirror that splits the measured light into transmitted light and reflected light; a first photosensitive device that detects the transmitted light to obtain a first measurement value; and a second photosensitive device that detects the reflected light to obtain a second measurement value. The dichroic mirror and the first photosensitive device constitute a first optical system, and the dichroic mirror and the second photosensitive device constitute a second optical system. Within a wavelength range of the measured light, a ratio of spectral characteristic curves of the first optical system and the second optical system has no repeated values, and the central wavelength of the measured light is obtained from a ratio of the first measurement value and the second measurement value. Thus, the central wavelength of the measured light can also be obtained quickly and accurately using a simple method.

An area-based measurement method for central wavelength according to another aspect of the present disclosure comprises: inputting measured light into a first optical system and a second optical system; detecting a first light propagated through the first optical system to obtain a first measurement value, and detecting a second light propagated through the second optical system to obtain a second measurement value; and obtaining a central wavelength of the measured light from a ratio of the first measurement value and the second measurement value. The first optical system is composed of a first filter and a photosensitive device, and the second optical system is composed of a second filter and a photosensitive device. Within a wavelength range of the measured light, a ratio of spectral characteristic curves of the first optical system and the second optical system has no repeated values.

In addition, a collimating lens, and/or a condenser lens, and/or a polarizer may be installed at the front end of the optical measurement system constructed according to the present disclosure, to achieve functions such as beam collimation, beam focusing, and polarization. In this case, the collimating lens, and/or the condenser lens, and/or the polarizer, together with the filter or dichroic mirror and the photosensitive device, need to be considered as a whole measurement system to ensure that the relationship between the wavelength of the measured light and the ratio of the measurement results of the two measurement systems is unique.

### Effects of the Disclosure

According to the present disclosure, there is provided an area-based measurement device and method for central wavelength that can quickly obtain the central wavelength of measured light simply by calculating the ratio of the first measurement value and the second measurement value, without using a spectrophotometer, a Michelson interferometer, an imaging colorimeter, or the like. Moreover, the area-based measurement device for central wavelength can be applied to various photosensitive devices and various wavelength ranges.

### BRIEF DESCRIPTION OF THE DRAWINGS

FIG. 1 is a schematic diagram showing the structure of an area-based measurement device for central wavelength according to a first embodiment of the present disclosure.
FIG. 2 is a flowchart showing an area-based measurement method for central wavelength of the area-based measurement device for central wavelength shown in FIG. 1.
FIG. 3(a) to (e) are diagrams showing examples of spectral characteristic curves of a first optical system and a second optical system in the area-based measurement device for central wavelength according to the first embodiment.
FIG. 4 is a schematic diagram showing the structure of an area-based measurement device for central wavelength according to a second embodiment of the present disclosure.
FIG. 5 is a flowchart showing an area-based measurement method for central wavelength of the area-based measurement device for central wavelength shown in FIG. 4.

### DETAILED DESCRIPTION

The technical solutions of the present disclosure will be described in detail below with reference to the accompanying drawings. It is apparent that the described embodiments are part of the embodiments of the present disclosure, rather than all of the embodiments. Based on the embodiments of the present disclosure, all other embodiments obtained by a person of ordinary skill in the art fall within the scope of protection of the present disclosure.

The terms "first", "second", etc., in the specification and claims of the present application are used to distinguish similar objects and are not used to describe a specific order or sequence. It should be understood that the data so used may be interchanged under appropriate circumstances so that the embodiments of the present application can be implemented in an order other than those illustrated or described herein, and the objects distinguished by "first", "second" are generally of one type, and the number of objects is not limited. For example, the first object may be one or multiple. In addition, "and/or" in the specification and claims indicates at least one of the connected objects, and the character "/" generally indicates that the associated objects are in an "or" relationship.

### First Embodiment

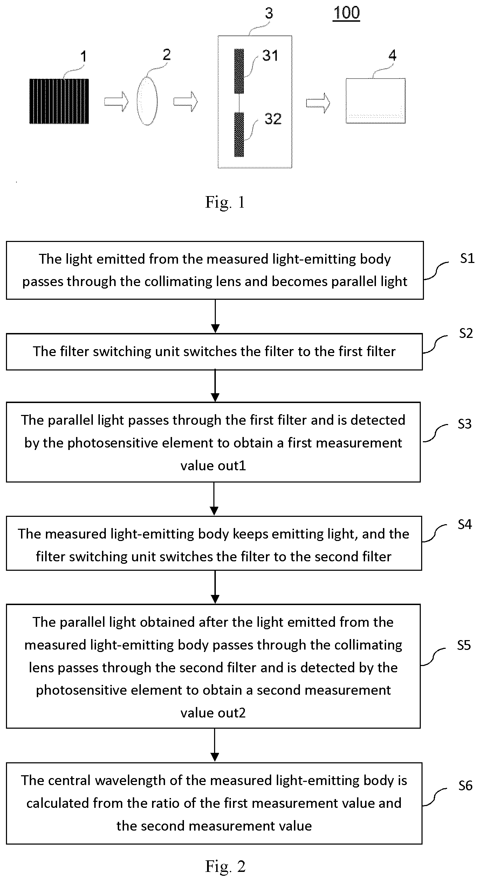

FIG. 1 is a schematic diagram showing the structure of an area-based measurement device for central wavelength according to a first embodiment of the present disclosure. Referring to FIG. 1, an area-based measurement device for central wavelength 100 of the first embodiment comprises: a measured light-emitting body 1 that emits measured light; a collimating lens 2 that condenses the measured light into parallel light; a filter switching unit 3 that switches between a first filter 31 and a second filter 32, thereby allowing the parallel light to pass through the first filter 31 and the second filter 32 respectively; and a photosensitive device 4 that detects a first light transmitted through the first filter 31 to obtain a first measurement value, and detects a second light transmitted through the second filter 32 to obtain a second measurement value. The collimating lens 2, the first filter 31, and the photosensitive device 4 constitute a first optical system. The collimating lens 2, the second filter 32, and the photosensitive device 4 constitute a second optical system. Within a wavelength range of the measured light, a ratio of spectral characteristic curves of the first optical system and the second optical system has no repeated values, and the central wavelength of the measured light is obtained from a ratio of the first measurement value and the second measurement value.

FIG. 2 is a flowchart showing an area-based measurement method for central wavelength of the area-based measurement device for central wavelength shown in FIG. 1. As shown in FIG. 2, the area-based measurement method for central wavelength comprises: the light emitted from the measured light-emitting body 1 passes through the collimating lens 2 and becomes parallel light (step S1); the filter switching unit 3 switches the filter to the first filter 31 (step S2); the parallel light passes through the first filter 31 and is detected by the photosensitive device 4 to obtain a first measurement value out1 (step S3); the measured light-emitting body 1 keeps emitting light, and the filter switching unit 3 switches the filter to the second filter 32 (step S4); the parallel light obtained by the light emitted from the measured light-emitting body 1 passing through the collimating lens 2 passes through the second filter 32 and is detected by the photosensitive device 4 to obtain a second measurement value out2 (step S5); and the central wavelength of the measured light-emitting body 1 is calculated from the ratio of the first measurement value and the second measurement value (step S6).

### Spectral Characteristic Curves of the First and Second Optical Systems

In the above area-based measurement device for central wavelength, let the spectrum of the measured light be Ø_{1,*λ*}(*λ*). Then the luminous flux within the wavelength range λ₁ to λ₂ of the measured light can be expressed as: ${∅}_{1} = {\int }_{{λ}_{1}}^{{λ}_{2}} {∅}_{1 , λ} \left(λ\right) dλ$

Then the central wavelength of the measured light can be expressed as: ${λ}_{c} = \frac{{\int }_{{λ}_{1}}^{{λ}_{2}} λ {∅}_{1 , λ} \left(λ\right) dλ}{{\int }_{{λ}_{1}}^{{λ}_{2}} {∅}_{1 , λ} \left(λ\right) dλ} = \frac{{\int }_{{λ}_{1}}^{{λ}_{2}} λ {∅}_{1 , λ} \left(λ\right) dλ}{{∅}_{1}}$

Let the transmittance curves of the collimating lens 2 and the first filter 31 be *F*₁(*λ*), the transmittance curves of the collimating lens 2 and the second filter 32 be *F*₂(*λ*), and the system response curve of the photosensitive device 4 be *S*₁(*λ*). Then the relationship between the first measurement value *out*₁ and the luminous flux of the measured light-emitting body 1 can be expressed as: ${out}_{1} = {\int }_{{λ}_{1}}^{{λ}_{2}} {∅}_{1 , λ} \left(λ\right) \times {F}_{1} \left(λ\right) \times {S}_{1} \left(λ\right) dλ$

The relationship between the second measurement value *out*₂ and the luminous flux of the measured light-emitting body 1 can be expressed as: ${out}_{2} = {\int }_{{λ}_{1}}^{{λ}_{2}} {∅}_{1 , λ} \left(λ\right) \times {F}_{2} \left(λ\right) \times {S}_{1} \left(λ\right) dλ$

In order to calculate the central wavelength of the measured light from the ratio of the measurement values, the spectral characteristic curves of the first optical system and the second optical system must satisfy that, within the wavelength range of the measured light, the ratio of the spectral characteristic curve *F*₁(*λ*) × *S*₁(*λ*) of the first optical system to the spectral characteristic curve *F*₂(*λ*) × *S*₁(*λ*) of the second optical system has no repeated values.

Specifically, since the measured light Ø_{1,*λ*}(*λ*) has a fixed spectral shape, the central wavelength λ_{c} of the measured light corresponds to a fixed value of $\frac{{out}_{1}}{{out}_{2}}$. For the measured light Ø_{1,*λ*}(*λ*), a change (Δ*λ*) in the central wavelength λ_{c} corresponds to a spectral shift of Ø_{1,*λ*}(*λ*). At this time, the first measurement value *out*₁ and the second measurement value *out*₂ also change with Δ*λ*. When different Δ*λ* correspond to different $Δ \frac{{out}_{1}}{{out}_{2}}$, λ_{c} can be uniquely determined from the value of $\frac{{out}_{1}}{{out}_{2}}$. For a specific Δ*λ*, the amount of change in the first measurement value *out*₁ depends on the spectral shape of *F*₁(*λ*) × *S*₁(*λ*), and the amount of change in the second measurement value *out*₂ depends on the spectral shape of *F*₂(*λ*) × *S*₁(*λ*)*.* If the ratio of *F*₁(*λ*) × *S*₁(*λ*) to *F*₂(*λ*) × *S*₁(*λ*) has no repeated values within the wavelength range λ₁ to λ₂ (i.e., $\frac{{F}_{1} \left(λ\right) \times {S}_{1} \left(λ\right)}{{F}_{2} \left(λ\right) \times {S}_{1} \left(λ\right)}$ is monotonic within the wavelength range λ₁ to λ₂), then $\frac{{out}_{1}}{{out}_{2}}$ is also monotonic within the wavelength range λ₁ to λ₂, and thus $\frac{{out}_{1}}{{out}_{2}}$ uniquely corresponds to the value of λ_{c}.

Below, as an example, the calculation principle of the central wavelength will be described taking the case where the spectral characteristic curve *F*₁(*λ*) × *S*₁(*λ*) of the first optical system is a monotonically increasing linear function and the spectral characteristic curve *F*₂(*λ*) × *S*₁(*λ*) of the second optical system is a monotonically decreasing linear function. ${F}_{1} \left(λ\right) \times {S}_{1} \left(λ\right) = {k}_{1} λ + {b}_{1}$ ${F}_{2} \left(λ\right) \times {S}_{1} \left(λ\right) = {k}_{2} λ + {b}_{2}$

Then: $\frac{{out}_{1}}{{out}_{2}} = \frac{{\int }_{{λ}_{1}}^{{λ}_{2}} {∅}_{1 , λ} \left(λ\right) \times \left({k}_{1}λ+{b}_{1}\right) dλ}{{\int }_{{λ}_{1}}^{{λ}_{2}} {∅}_{1 , λ} \left(λ\right) \times \left({k}_{2}λ+{b}_{2}\right) dλ}$

Dividing both the numerator and denominator on the right side by the luminous flux Ø₁ yields: $\frac{{out}_{1}}{{out}_{2}} = \frac{\frac{{\int }_{{λ}_{1}}^{{λ}_{2}} {∅}_{1 , λ} \left(λ\right) \times \left({k}_{1}λ+{b}_{1}\right) dλ}{{∅}_{1}}}{\frac{{\int }_{{λ}_{1}}^{{λ}_{2}} {∅}_{1 , λ} \left(λ\right) \times \left({k}_{2}λ+{b}_{2}\right) dλ}{{∅}_{1}}}$ $\frac{{out}_{1}}{{out}_{2}} = \frac{\frac{{\int }_{{λ}_{1}}^{{λ}_{2}} {∅}_{1 , λ} \left(λ\right) \times {k}_{1} λdλ}{{∅}_{1}} + \frac{{\int }_{{λ}_{1}}^{{λ}_{2}} {∅}_{1 , λ} \left(λ\right) \times {b}_{1} dλ}{{∅}_{1}}}{\frac{{\int }_{{λ}_{1}}^{{λ}_{2}} {∅}_{1 , λ} \left(λ\right) \times {k}_{2} λdλ}{{∅}_{1}} + \frac{{\int }_{{λ}_{1}}^{{λ}_{2}} {∅}_{1 , λ} \left(λ\right) \times {b}_{2} dλ}{{∅}_{1}}}$ $\frac{{out}_{1}}{{out}_{2}} = \frac{{k}_{1} {λ}_{c} + {b}_{1}}{{k}_{2} {λ}_{c} + {b}_{2}}$

After transformation, we obtain: ${λ}_{c} = \frac{{b}_{1} - {b}_{2} \times \frac{{out}_{1}}{{out}_{2}}}{{k}_{2} \times \frac{{out}_{1}}{{out}_{2}} - {k}_{1}}$

In Equation (7), *k*₁, *k*₂, *b*₁, and *b*₂ are constants that depend only on the first filter, the second filter, and the photosensitive device.

As described above, the central wavelength can be obtained by calculating the ratio $\frac{{out}_{1}}{{out}_{2}}$ of the first measurement value and the second measurement value.

The above description uses only the example where the first and second optical systems have monotonically increasing and decreasing linear functions. When the ratio of the spectral characteristic curves of the first optical system and the second optical system has no repeated values, i.e., the ratio $\frac{{out}_{1}}{{out}_{2}}$ of the first measurement value and the second measurement value has no repeated values within the wavelength range of the measured light, the central wavelength can be obtained from this ratio $\frac{{out}_{1}}{{out}_{2}}$.

Furthermore, it should be understood that the collimating lens is not necessary in the first and second optical systems and may be omitted depending on the situation.

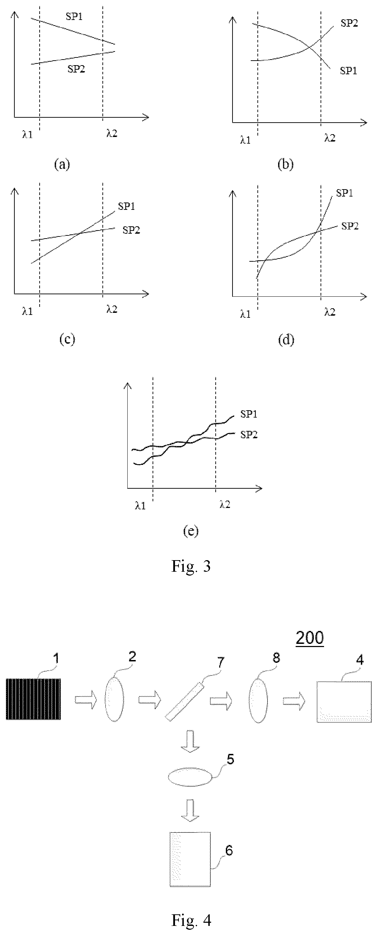

FIGS. 3(a) to (e) are examples of spectral characteristic curves of the first optical system and the second optical system.

In FIGS. 3(a) to (e), within the wavelength range λ₁ to λ₂ of the measured light, the ratio of the spectral characteristic curve SP1 of the first optical system to the spectral characteristic curve SP2 of the second optical system has no repeated values, which means that it can be ensured that the solution for the central wavelength calculated using the ratio of the measurement values is unique, thereby ensuring the accuracy of the measurement result. The central wavelength of the measured light can be calculated using calibration techniques or supervised learning techniques.

Specifically, in FIG. 3(a), the spectral characteristic curve SP1 of the first optical system linearly decreases, and the spectral characteristic curve SP2 of the second optical system linearly increases. Although the two curves have no intersection point within the wavelength range λ₁ to λ₂, the ratio of SP1 and SP2 is a monotonic function, which can ensure a unique solution for the central wavelength.

In FIG. 3(b), the spectral characteristic curve SP1 of the first optical system monotonically decreases, and the spectral characteristic curve SP2 of the second optical system monotonically increases. The two curves have exactly one intersection point within the wavelength range λ₁ to λ₂, which can also ensure a unique solution for the central wavelength.

In FIG. 3(c), the spectral characteristic curves SP1 and SP2 of the first and second optical systems both monotonically increase, but the slope of the spectral characteristic curve SP1 of the first optical system is larger. The two curves have exactly one intersection point within the wavelength range λ₁ to λ₂, which can also ensure a unique solution for the central wavelength.

In FIG. 3(d), the spectral characteristic curves SP1 and SP2 of the first and second optical systems both monotonically increase, but they have two intersection points within the wavelength range λ₁ to λ₂. In this case, a unique solution for the central wavelength cannot be ensured. Therefore, in the case of FIG. 3(d), the central wavelength cannot be accurately obtained from the ratio of SP1 and SP2, and the measurement error becomes large.

Furthermore, in actual production, due to the difficulty of manufacturing optical components and the presence of errors, the system response curve may be monotonic overall but have small "ripples" in detail. FIG. 3(e) shows such an example. Although the spectral characteristic curves SP1 and SP2 of the first and second optical systems are both monotonically increasing overall, the presence of small "ripples" causes non-uniqueness in their ratio, thus leading to large errors in the measurement result.

Therefore, the system response curves of the first and second optical systems of the present disclosure are preferably monotonic and opposite curves (one increasing, one decreasing). When they are guaranteed to be monotonic and opposite curves, even if small ripples exist, the overall error is smaller than in other cases. Therefore, it is preferred that the first optical system and the second optical system have opposite monotonic characteristics. Moreover, the spectral characteristic curves of the first optical system and the second optical system are not limited to linear functions; they may be exponential functions, monotonic polynomial functions, power functions, etc., provided that the spectral shape of the measured light is unchanged.

### Selection of Photosensitive Device and Filters

The photosensitive device 4 may be at least one of a silicon photomultiplier (MPPC/SiPM), a single-photon avalanche diode (SPAD), a CCD image sensor, a CMOS image sensor, a TDI-CCD image sensor, an sCMOS image sensor, a qCMOS image sensor, a photomultiplier tube (PMT), a photodiode, a PIN photodiode, and an avalanche photodiode. Depending on the photosensitive device, the first measurement value *out*₁ and the second measurement value *out*₂ may be light intensity values, or count values, voltage values, current values, etc., corresponding to the light intensity values.

In addition, the first filter 31 and the second filter 32 may be broadband filters, and their transmittance may be, for example, 30% or more. Moreover, the wavelength ranges of the first filter 31 and the second filter 32 are preferably wider than the wavelength range of the photosensitive device. Thus, the central wavelength can be measured more accurately.

### Calculation Unit and Storage Unit

The area-based measurement device for central wavelength of the present disclosure may include a calculation unit and a storage unit. The storage unit may store calculation functions for different optical measurement systems (e.g., Equation (7) including the coefficients *k*₁, *k*₂, *b*₁, and *b*₂). The calculation unit calculates the central wavelength based on the calculation function stored in the storage unit and the ratio of the measurement values of the different optical measurement systems.

Alternatively, the calculation functions for different optical measurement systems may also be obtained by curve fitting of calculated values and true values, and the fitted function may be stored in the storage unit in advance. The fitting method may employ conventional methods such as the least squares method, which will not be described in detail here.

### Second Embodiment

FIG. 4 is a schematic diagram showing the structure of an area-based measurement device for central wavelength according to a second embodiment of the present disclosure. Referring to FIG. 4, an area-based measurement device for central wavelength 200 of the second embodiment comprises: a measured light-emitting body 1 that emits measured light; a collimating lens 2 that condenses the measured light into parallel light; a dichroic mirror 7 that splits the parallel light into transmitted light and reflected light; a first photosensitive device 4 that detects the transmitted light to obtain a first measurement value; and a second photosensitive device 6 that detects the reflected light to obtain a second measurement value. The collimating lens 2, the dichroic mirror 7, and the first photosensitive device 4 constitute a first optical system, and the collimating lens 2, the dichroic mirror 7, and the second photosensitive device 6 constitute a second optical system. Within a wavelength range of the measured light, a ratio of spectral characteristic curves of the first optical system and the second optical system has no repeated values, and the central wavelength of the measured light is obtained from a ratio of the first measurement value *out*₁ and the second measurement value *out*₂. According to the area-based measurement device for central wavelength 200 of the second embodiment, the same effects as those of the area-based measurement device for central wavelength 100 of the first embodiment can be achieved.

In addition, a lens 8 may be provided between the dichroic mirror 7 and the first photosensitive device 4, and a lens 5 may be provided between the dichroic mirror 7 and the second photosensitive device 6. In this case, the collimating lens 2, the dichroic mirror 7, the lens 8, and the first photosensitive device 4 constitute the first optical system; the collimating lens 2, the dichroic mirror 7, the lens 5, and the second photosensitive device 6 constitute the second optical system.

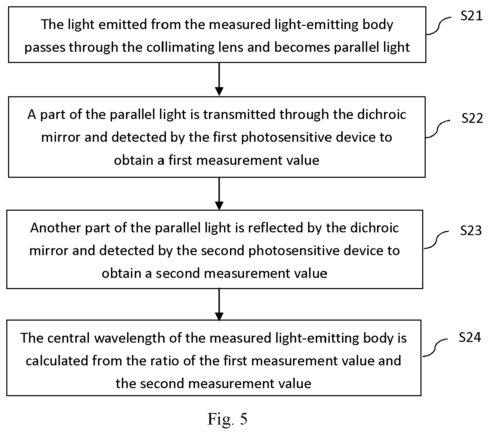

FIG. 5 is a flowchart showing an area-based measurement method for central wavelength of the area-based measurement device for central wavelength shown in FIG. 4. As shown in FIG. 5, the area-based measurement method for central wavelength comprises: the light emitted from the measured light-emitting body 1 passes through the collimating lens 2 and becomes parallel light (step S21); a part of the parallel light is transmitted through the dichroic mirror 7 and detected by the first photosensitive device 4 to obtain a first measurement value *out*₁ (step S22); another part of the parallel light is reflected by the dichroic mirror 7 and detected by the second photosensitive device 6 to obtain a second measurement value *out*₂ (step S23); and the central wavelength of the measured light-emitting body 1 is calculated from the ratio of the first measurement value and the second measurement value (step S24). According to the area-based measurement method for central wavelength of the present embodiment, the same effects as those of the area-based measurement method for central wavelength of the first embodiment can be achieved.

It should be noted that, in this document, the terms "comprise", "include", or any other variation thereof are intended to cover non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not exclude the presence of additional identical elements in the process, method, article, or apparatus that comprises the element. In addition, it should be noted that the scope of the methods and apparatuses in the embodiments of the present application is not limited to performing functions in the order shown or discussed, but may also include performing functions in substantially simultaneous manner or in reverse order depending on the functions involved. For example, the described methods may be performed in an order different from that described, and steps may be added, omitted, or combined. Additionally, features described with reference to certain examples may be combined in other examples.

The embodiments and examples of the present application have been described above with reference to the accompanying drawings, but the present application is not limited to the specific embodiments and examples described above. The specific embodiments and examples described above are illustrative rather than restrictive. A person of ordinary skill in the art, inspired by the present application, may make many modifications without departing from the spirit of the present application and the scope of protection of the claims, and all such modifications fall within the protection of the present application.

## Claims

1. An area-based measurement device for central wavelength, comprising:
a measured light-emitting body that emits measured light;
a filter switching unit that switches between a first filter and a second filter, thereby allowing the measured light to pass through the first filter and the second filter respectively; and
a photosensitive device that detects a first light transmitted through the first filter to obtain a first measurement value, and detects a second light transmitted through the second filter to obtain a second measurement value,
wherein the first filter and the photosensitive device constitute a first optical system,
the second filter and the photosensitive device constitute a second optical system,
within a wavelength range of the measured light, a ratio of spectral characteristic curves of the first optical system and the second optical system has no repeated values, and
the central wavelength of the measured light is obtained from a ratio of the first measurement value and the second measurement value.

2. The area-based measurement device for central wavelength according to claim 1, wherein, within the wavelength range of the measured light, the spectral characteristic curves of the first optical system and the second optical system have exactly one intersection point.

3. The area-based measurement device for central wavelength according to claim 1, wherein, within the wavelength range of the measured light, one of the spectral characteristic curves of the first optical system and the second optical system monotonically increases, and the other of the spectral characteristic curves of the first optical system and the second optical system monotonically decreases.

4. The area-based measurement device for central wavelength according to any one of claims 1 to 3, wherein, letting the central wavelength be *λ_{c}*, the first measurement value be *out*₁, and the second measurement value be *out*₂, then ${λ}_{c} = \frac{{b}_{1} - {b}_{2} \times \frac{{out}_{1}}{{out}_{2}}}{{k}_{2} \times \frac{{out}_{1}}{{out}_{2}} - {k}_{1}}$ wherein *k*₁, *k*₂, *b*₁ and *b*₂ are constants that depend on the first filter, the second filter, and the photosensitive device.

5. The area-based measurement device for central wavelength according to any one of claims 1 to 3, wherein, the photosensitive device is at least one of a silicon photomultiplier (MPPC/SiPM), a single-photon avalanche diode (SPAD), a CCD image sensor, a CMOS image sensor, a TDI-CCD image sensor, an sCMOS image sensor, a qCMOS image sensor, a photomultiplier tube (PMT), a photodiode, a PIN photodiode, and an avalanche photodiode.

6. The area-based measurement device for central wavelength according to any one of claims 1 to 3, wherein, the spectral characteristic curves of the first optical system and the second optical system include at least one of a linear function, an exponential function, a monotonic polynomial function, and a power function.

7. The area-based measurement device for central wavelength according to any one of claims 1 to 3, wherein, the first filter and the second filter are broadband filters, and transmittance of the first filter and the second filter is 30% or more.

8. The area-based measurement device for central wavelength according to any one of claims 1 to 3, wherein, the first measurement value and the second measurement value are light intensity values, or count values, voltage values, current values corresponding to light intensity values.

9. The area-based measurement device for central wavelength according to any one of claims 1 to 3, wherein, wavelength ranges of the first filter and the second filter are wider than a wavelength range of the photosensitive device.

10. The area-based measurement device for central wavelength according to any one of claims 1 to 9, wherein, an optical element for adjusting an optical path or polarization state of the measured light is disposed between the measured light-emitting body and the filter switching unit,
the optical element, the first filter, and the photosensitive device constitute the first optical system, and
the optical element, the second filter, and the photosensitive device constitute the second optical system.

11. An area-based measurement device for central wavelength, comprising:
a measured light-emitting body that emits measured light;
a dichroic mirror that splits the measured light into transmitted light and reflected light;
a first photosensitive device that detects the transmitted light to obtain a first measurement value; and
a second photosensitive device that detects the reflected light to obtain a second measurement value,
wherein the dichroic mirror and the first photosensitive device constitute a first optical system,
the dichroic mirror and the second photosensitive device constitute a second optical system,
within a wavelength range of the measured light, a ratio of spectral characteristic curves of the first optical system and the second optical system has no repeated values, and
the central wavelength of the measured light is obtained from a ratio of the first measurement value and the second measurement value.

12. An area-based measurement method for central wavelength, comprising:
inputting measured light into a first optical system and a second optical system;
detecting a first light propagated through the first optical system to obtain a first measurement value, and detecting a second light propagated through the second optical system to obtain a second measurement value; and
obtaining the central wavelength of the measured light from a ratio of the first measurement value and the second measurement value,
wherein the first optical system is composed of a first filter and a photosensitive device, and the second optical system is composed of a second filter and a photosensitive device, and
within a wavelength range of the measured light, a ratio of spectral characteristic curves of the first optical system and the second optical system has no repeated values.
